# FASCICULE DE BREVET EUROPEEN

(11) **EP 3 815 992 B1**
(45) Date de publication et mention de la délivrance du brevet: **20.07.2022**
(21) Numéro de dépôt: 20205598.4
(22) Date de dépôt: 04.11.2020
(51) Int. Cl.: B60S 5/04

(54) **SYSTÈME AUTOMATISÉ ET INTERACTIF DE GONFLAGE DES PNEUMATIQUES D'UN VÉHICULE**
AUTOMATISIERTES UND INTERAKTIVES SYSTEM ZUM AUFBLASEN VON REIFEN EINES FAHRZEUGS
AUTOMATED AND INTERACTIVE SYSTEM FOR INFLATING THE TYRES OF A VEHICLE

(30) Priorité: 04.11.2019 FR 1912322
(43) Date de publication de la demande: 05.05.2021
(73) Titulaire: Norauto International, 59262 Sainghin en Melantois (FR)
(72) Inventeur: CHAVATTE, Franck, 59155 FACHES THUMESNIL (FR); CRETON, Nicolas, 59139 WATTIGNIES (FR); MARCINKOWSKI, Jean-Luc, 60590 BOUTENCOURT (FR)
(74) Mandataire: Touroude, Magali Linda

(56) Documents cités:
- WO-A2-2006/005953
- GB-A- 2 417 152
- US-A1- 2011 172 821
- US-A1- 2018 215 043

## Description

L'invention concerne de manière générale le gonflage des pneumatiques d'un véhicule. Plus particulièrement, l'invention se rapporte à un procédé et à un système automatisé et interactif de gonflage des pneumatiques d'un véhicule.

Les pneumatiques sont des organes essentiels au bon fonctionnement du véhicule et à la sécurité routière. L'état des pneumatiques, en termes de pression de gonflage et d'usure, a une forte influence non seulement sur la stabilité, la tenue de route et le freinage du véhicule, mais aussi sur sa consommation en énergie et, corrélativement, dans le cas d'un véhicule thermique, sur ses émissions de CO2 et d'autres polluants. Des pneumatiques en bon état de fonctionnement garantissent la sécurité de conduite par l'adhérence à la route qu'ils procurent, en particulier dans les virages, en cas de freinage et lors de conditions climatiques difficiles ou d'un revêtement déficient de la route.

Un grand nombre d'accidents sur les routes sont imputables à des pneumatiques en état de sous-gonflage, de sur-gonflage ou d'usure prononcée. Des mauvaises pressions de gonflage affectent négativement l'adhérence des pneumatiques sur la route, le freinage du véhicule, ainsi que sa tenue de route. Le sous-gonflage d'un pneumatique, ou le sur-gonflage, conduit à une usure prématurée de celui-ci. Le risque de crevaison ou d'éclatement est également accru.

La consommation énergétique du véhicule est impactée par la résistance au roulement de celui-ci, c'est-à-dire, par le frottement entre les pneumatiques et le revêtement de la route. Selon les conditions, 20 à 30% de la consommation énergétique totale du véhicule est consacrée à vaincre la résistance au roulement. Un pneumatique sous-gonflé accroit la résistance au roulement du véhicule et peut provoquer une surconsommation en énergie. Dans un véhicule thermique, l'augmentation de la consommation de carburant peut être supérieure à 10%.

Une petite fuite d'air est normale dans un pneumatique de véhicule. Dans certaines circonstances, cette fuite d'air peut entraîner une perte de pression allant, par exemple, jusqu'à 0,1 bar en un mois. Le gonflage des pneumatiques aux pressions préconisées par le constructeur fait donc partie des opérations d'entretien courantes qui doivent être réalisées périodiquement sur un véhicule afin de garantir un fonctionnement satisfaisant et sûr de celui-ci.

Bien que la plupart des conducteurs soient conscients de l'importance de gonfler les pneumatiques aux pressions indiquées par le constructeur, différentes raisons peuvent expliquer qu'un grand nombre de véhicules circulent avec des pneumatiques incorrectement gonflés. Dans le rythme de la vie quotidienne, les conducteurs oublient de vérifier périodiquement la pression des pneumatiques de leur véhicule. Le dispositif d'alerte de pneumatique dégonflé dans les véhicules ne se déclenche généralement que lorsque la pression est bien inférieure, de l'ordre de -25%, à celle préconisée par le constructeur. L'utilisation d'huiles moteur plus performantes dans les véhicules a provoqué un allongement de la durée entre deux visites dans les garages automobiles pour la vidange de l'huile moteur, ce qui par voie de conséquence supprime des opérations de contrôle de la pression des pneumatiques exécutées habituellement par des professionnels à l'occasion de ces visites. Le gonflage des pneumatiques peut aussi être perçu par certains conducteurs comme une tâche relativement fastidieuse qui est repoussée à plus tard. Les conducteurs n'ont pas forcément en tête les pressions de gonflage préconisées, d'autant plus que différentes pressions peuvent être recommandées pour différents types et tailles de pneus, et peuvent avoir oubliés que celles-ci sont indiquées sur une plaque d'information fixée généralement sur la portière de conducteur du véhicule ou dans les documents de celui-ci.

Dans l'état de la technique, avec l'objectif d'améliorer à la situation décrite ci-dessus, il a été proposé des systèmes automatisés de gonflage des pneumatiques d'un véhicule. Ainsi, par le document US20110172821A1, qui divulgue le préambule de la revendication 7, il est connu un système de gonflage de pneumatique comprenant une caméra de lecture de la plaque d'immatriculation et quatre bras robotisés munis de moyens de manipulation de valve et de gonflage des pneumatiques. Les données de plaque d'immatriculation sont transmises à un serveur informatique relié au réseau Internet. Les pressions de gonflage préconisées par le constructeur sont ainsi récupérées dans une base de données du serveur informatique. Les bras robotisés sont équipés chacun d'un dispositif optique utilisé pour leur pilotage de détection et d'alignement avec les roues.

Le document US20150059918A1 décrit un système de gonflage de pneumatique ayant une fonction d'assistance à l'utilisateur et connecté au réseau Internet. Un téléphone intelligent, dit « smartphone », est utilisé pour prendre et envoyer une image du véhicule à un serveur informatique distant. Le véhicule est identifié par le serveur à partir de cette image afin de récupérer les données de pression de gonflage qui sont transmises au système. Un lecteur optique est également prévu pour récupérer directement sur le véhicule les données de pression de gonflage indiquées sur une plaque d'information. Une unité de gonflage ajuste automatiquement la pression du pneumatique à une pression de consigne.

La présente invention a pour objectif de procurer un système fiable et économiquement optimisé pour un gonflage automatisé et interactif des pneumatiques d'un véhicule, qui soit capable notamment de récupérer des pressions préconisées par le constructeur pour différentes montes possibles de pneumatiques sur le véhicule et de prendre en compte des informations apportées par l'utilisateur du système.

Selon un premier aspect, l'invention concerne un procédé de gonflage des pneumatiques d'un véhicule comprenant une étape de lecture d'un numéro d'immatriculation du véhicule par reconnaissance optique de caractères sur une image prise par une première caméra d'une plaque d'immatriculation du véhicule, une étape d'identification d'un ensemble de données de pression de gonflage correspondant à différentes montes de pneumatiques associées à un type du véhicule à partir d'au moins une interrogation avec le numéro d'immatriculation lu d'au moins une base de données, une étape d'identification d'une monte de pneumatiques présente dans le véhicule, une étape de sélection dans l'ensemble de données de pression de gonflage identifiées de données de pression de gonflage pour le véhicule à partir de la monte de pneumatiques identifiée du véhicule, et une étape de commande avec les données de pression de gonflage sélectionnées, en tant que consignes de pression de gonflage, d'un automate de gonflage de pneumatique relié à des pneumatiques du véhicule afin d'ajuster les pressions de gonflage des pneumatiques, dans lequel l'étape d'identification de la monte de pneumatiques présente dans le véhicule comprend une sous-étape de guidage du véhicule roulant jusqu'à une position de stationnement adéquate dans laquelle une roue du véhicule est placée dans une position de roue déterminée par rapport à une deuxième caméra et un dispositif de balayage par rayon laser, une sous-étape de validation de stationnement du véhicule par une détection sur des images prises par la deuxième caméra d'une absence de mouvement de la roue à la position de roue déterminée pendant une durée déterminée (DR), et une sous-étape de lecture de données de caractéristiques techniques de pneumatique, identifiant la monte de pneumatiques présente dans le véhicule, par reconnaissance optique de caractères sur une image prise avec balayage par rayon laser par la deuxième caméra d'un flanc de pneumatique de la roue à la position de roue déterminée.

Selon une caractéristique particulière, l'étape d'identification de l'ensemble de données de pression de gonflage correspondant aux différentes montes de pneumatiques associées au type du véhicule comprend une première interrogation de base de données avec le numéro d'immatriculation lu pour obtenir le type du véhicule et une deuxième interrogation de base de données avec le type du véhicule pour obtenir l'ensemble de données de pression de gonflage correspondant aux différentes montes de pneumatiques associées.

Selon une autre caractéristique particulière, ladite au moins une base de données est hébergée dans au moins un serveur informatique relié à un réseau de communication de données de type Internet et accessible à travers un réseau téléphonique de communication de données.

Selon encore une autre caractéristique particulière, les données de caractéristiques techniques de pneumatique comprennent une largeur de pneumatique, une hauteur de flanc de pneumatique, un type de structure de pneumatique, un diamètre de pneumatique, un indice de charge de pneumatique et un indice de vitesse de pneumatique.

Selon encore une autre caractéristique particulière, le procédé comprend une sous-étape de validation par l'utilisateur des données de caractéristiques techniques de pneumatique lues et/ou d'indication par l'utilisateur des données de caractéristiques techniques de pneumatique du véhicule en cas d'échec de lecture lors de la sous-étape de lecture des données de caractéristiques techniques de pneumatique.

Selon encore une autre caractéristique particulière, le procédé comprend une étape de validation par l'utilisateur des données de pression de gonflage sélectionnées et/ou de modification des données de pression de gonflage sélectionnées en fonction d'une indication de l'utilisateur, qui précède l'étape de commande avec les données de pression de gonflage sélectionnées, en tant que consignes de pression de gonflage, de l'automate de gonflage de pneumatique.

Selon une autre aspect, l'invention concerne aussi un système de gonflage des pneumatiques d'un véhicule pour la mise en œuvre du procédé décrit brièvement ci-dessus, comprenant une unité centrale de commande, des moyens d'interface homme-machine, une première caméra dédiée à une lecture du numéro d'immatriculation du véhicule, un dispositif de guidage et positionnement de véhicule, un dispositif de détection de stationnement de véhicule et de capture d'image de pneumatique, un automate de gonflage de pneumatique et un ou plusieurs serveurs informatiques distants, hébergeant une ou plusieurs bases de données, reliés à un réseau de communication de données de type Internet et en communication avec l'unité centrale de commande à travers un réseau téléphonique de communication de données, dans lequel le dispositif de guidage et positionnement de véhicule comprend un rail de guidage de roue et une cale de roue fixant une position de roue déterminée et le dispositif de détection de stationnement de véhicule et de capture d'image de pneumatique comprend une deuxième caméra et un dispositif de balayage par rayon laser agencés de façon à réaliser une première fonction de détection de roue et d'absence de mouvement de roue pendant une durée déterminée et une deuxième fonction de lecture de caractéristiques techniques de pneumatique sur un flanc de pneumatique de la roue.

Selon une caractéristique particulière, l'unité centrale de commande, les moyens d'interface homme-machine et l'automate de gonflage de pneumatique sont intégrés dans une borne de gonflage.

Selon une autre caractéristique particulière, les moyens d'interface homme-machine comprennent un écran tactile.

Selon encore une autre caractéristique particulière, les moyens d'interface homme-machine comprennent un haut-parleur.

D'autres avantages et caractéristiques de la présente invention apparaîtront plus clairement à la lecture de la description ci-dessous de plusieurs formes de réalisation particulières en référence aux dessins annexés, dans lesquels :
La Figure 1 est une vue générale simplifiée d'une forme de réalisation particulière du système automatisé et interactif de gonflage de pneumatiques selon l'invention.
La Figure 2 est une autre vue générale simplifiée du système automatisé et interactif de gonflage de pneumatiques de la Fig.1.
La Figure 3 est un bloc-diagramme général montrant un exemple d'architecture fonctionnelle d'une borne de gonflage de pneumatique du système selon l'invention.
La Figure 4 est une vue simplifiée en perspective montrant la lecture d'un flanc de pneumatique par caméra, avec un balayage par rayon laser.
La Figure 5 montre un exemple de données de caractéristiques techniques d'un pneumatique inscrites sur un flanc de celui-ci.
La Figure 6 est un algorithme fonctionnel montrant différentes étapes comprises dans une forme de réalisation particulière du procédé automatisé et interactif de gonflage de pneumatiques selon l'invention.

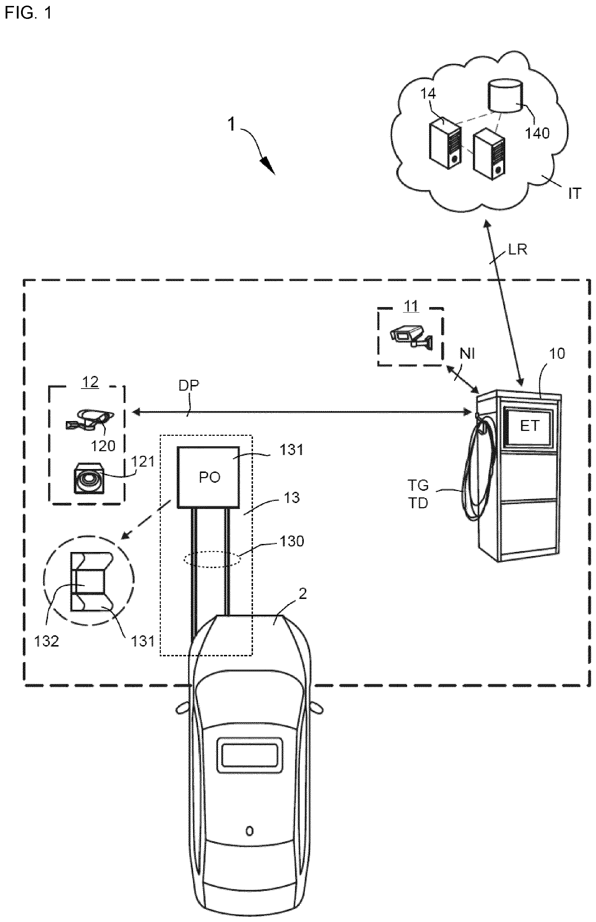

En référence aux Figs.1 à 6, il est maintenant décrit ci-dessous, à titre d'exemple, une forme de réalisation particulière 1 du système automatisé et interactif de gonflage de pneumatiques selon l'invention.

Le système selon l'invention est conçu pour récupérer automatiquement les données de pression de gonflage de pneumatique s'appliquant à la monte de pneumatiques présente sur un véhicule d'utilisateur. Pour cela, le système utilise le numéro d'immatriculation lu sur la plaque d'immatriculation du véhicule pour récupérer dans une base de données les différentes montes de pneumatiques possibles sur le véhicule et les données de pression de gonflage de pneumatique associées à ces différentes montes. Le système effectue aussi une lecture directe des données inscrites sur le flanc du pneumatique monté sur le véhicule et détermine ainsi la monte de pneumatiques présente sur le véhicule. Une fois déterminée la monte de pneumatiques présente, le système est en mesure d'extraire les données de pression de gonflage de pneumatique s'appliquant à ce véhicule dans les données lues dans la base de données.

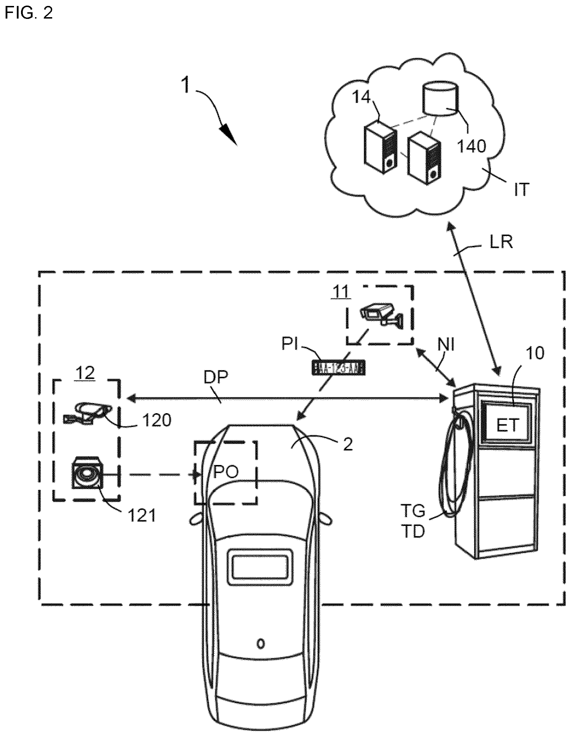

Comme montré schématiquement aux Figs.1 et 2, le système automatisé et interactif de gonflage de pneumatiques 1 comprend essentiellement une borne de gonflage 10, une caméra de lecture de numéro d'immatriculation 11, un dispositif de détection de stationnement de véhicule et de capture d'image de pneumatique 12, un dispositif de guidage et positionnement de véhicule 13 et un ou plusieurs serveurs informatiques distants 14 hébergeant une ou plusieurs bases de données 140.

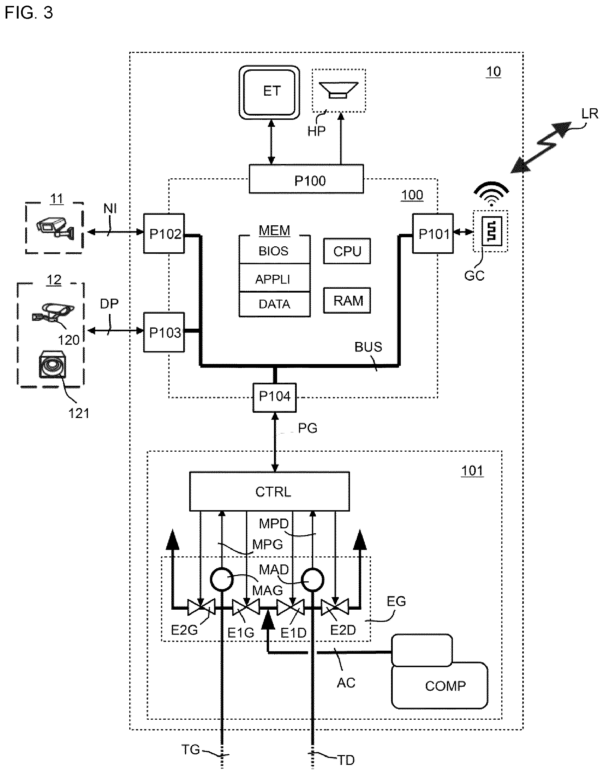

En référence aussi à la Figs.3, la borne de gonflage 10 comprend essentiellement une unité centrale de commande 100 équipée de moyens d'interface homme-machine ET, HP, d'un galet de communication radio GC et d'un automate de gonflage de pneumatique 101.

L'unité centrale de commande 100 est par exemple une unité centrale de type « nano-ordinateur » et comprend essentiellement un microprocesseur CPU, une mémoire vive RAM, une mémoire réinscriptible MEM et des ports d'entrées/sorties P100 à P104. La mémoire RAM est la mémoire de travail du microprocesseur CPU. La mémoire réinscriptible MEM héberge typiquement un système élémentaire dit « BIOS » gérant les entrées/sorties du microprocesseur, un module logiciel d'application APPLI et une zone de stockage des données DATA. Le module logiciel d'application APPLI gère le fonctionnement général du système 1. Le module logiciel d'application APPLI intègre la logique de commande du système 1, traite les données et gère les différents échanges de communication entre les composants fonctionnels du système 1. La zone DATA stocke diverses données nécessaires au module logiciel d'application APPLI et au fonctionnement du système 1. Les ports d'entrées/sorties P100 à P104 sont reliés au microprocesseur CPU à travers un bus interne de communication de données BUS de l'unité centrale de commande 100.

Les moyens d'interface homme-machine comprennent ici essentiellement un écran tactile ET et un haut-parleur HP. L'écran tactile ET et le haut-parleur HP autorisent un dialogue interactif entre l'utilisateur et le système 1. Sur l'écran tactile ET sont affichées des informations et des requêtes à l'intention de l'utilisateur.

Comme visible à la Fig.3, les moyens d'interface homme-machine ET, HP, sont reliés à l'unité centrale de commande 100 à travers le port d'entrée/sortie P100. Le port d'entrée/sortie P100 est typiquement une interface audio/vidéo de type « HDMI » (pour « High Définition Multimedia Interface » en anglais) supportant une liaison filaire de communication.

Le galet de communication radio GC est ici un module émetteur/récepteur de communication radio, typiquement de type « 3G », « 4G » ou « 5G » et muni d'une carte « SIM » (pour « Subscriber Identity Module » en anglais) pour un accès au réseau Internet, repéré ici IT, à travers un réseau téléphonique de communication de données. Le galet de communication radio GC est relié à l'unité centrale de commande 100 à travers le port d'entrée/sortie P101. Le port d'entrée/sortie P101 est typiquement une interface de communication série de type « USB » (pour « Universal Serial Bus » en anglais) supportant une liaison filaire de communication. Le galet de communication radio GC autorise une liaison de communication des données LR à travers le réseau Internet IT entre l'unité centrale de commande 100 et le serveur 14 hébergeant la base de données 140.

La caméra de lecture de numéro d'immatriculation 11 a essentiellement pour fonction de lire le numéro d'immatriculation NI du véhicule d'utilisateur 2 indiqué sur la plaque d'immatriculation PI de celui-ci.

Comme visible à la Fig.3, la caméra de lecture de numéro d'immatriculation 11 est reliée à l'unité centrale de commande 100 à travers le port d'entrée/sortie P102. Le port d'entrée/sortie P102 est typiquement une interface de communication série de type « USB » supportant une liaison filaire de communication.

Pour réaliser sa fonction, la caméra 11 comprend un module logiciel embarqué contenu dans une mémoire de celle-ci et qui gère son fonctionnement. La caméra 11 comprend un microprocesseur pour l'exécution des instructions de programme de ce module logiciel embarqué. Le module logiciel embarqué de la caméra 11 traite et analyse les images prises du véhicule 2 afin d'en extraire le numéro d'immatriculation NI. Le numéro d'immatriculation NI, une fois extrait des images, est transmis à l'unité centrale de commande 100 par la caméra 11.

Le dispositif de détection de stationnement de véhicule et de capture d'image de pneumatique 12 réalise essentiellement une première fonction dite de détection d'absence de mouvement de roue et une deuxième fonction dite de lecture de flanc de pneumatique. Le dispositif de détection de stationnement de véhicule et de capture d'image de pneumatique 12 comprend essentiellement une caméra 120 et un dispositif de balayage par rayon laser 121. Des modules logiciels embarqués sont contenus dans des mémoires de la caméra 120 et du dispositif de balayage par rayon laser 121 et gèrent leurs fonctionnements, la caméra 120 et le dispositif 121 comprenant typiquement chacun un microprocesseur pour l'exécution des instructions de programme de ces modules logiciels embarqués. Le module logiciel embarqué dans la caméra 120 permet de traiter et d'analyser les images prises par celle-ci afin de réaliser les fonctions susmentionnées.

Comme visible à la Fig.3, le dispositif de détection de stationnement de véhicule et de capture d'image de pneumatique 12 est relié à l'unité centrale de commande 100 à travers le port d'entrée/sortie P103. Le port d'entrée/sortie P103 est typiquement une interface de communication série de type « USB » supportant une liaison filaire de communication.

Pour réaliser les première et deuxième fonctions susmentionnées, le véhicule 2 doit être stationné de façon à ce que l'une de ses roues, par exemple ici la roue avant gauche, se trouve à une position prédéterminée. Le positionnement de la roue est nécessaire pour le fonctionnement du dispositif de détection de stationnement de véhicule et de capture d'image de pneumatique 12, celle-ci devant se trouver dans le champ de prise de vue de la caméra 120 et le champ de balayage par rayon laser du dispositif 121.

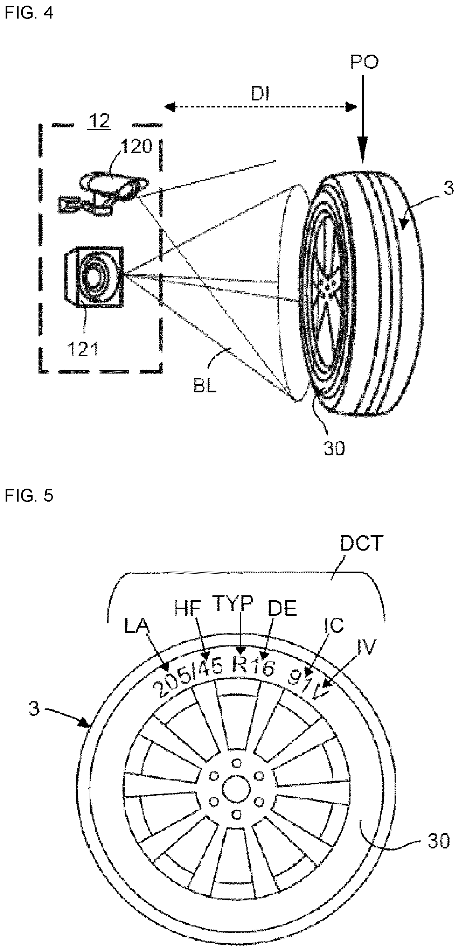

Le dispositif de guidage et positionnement de véhicule 13 prévu dans la présente invention permet de garantir le stationnement adéquat du véhicule 2 et le bon positionnement de la roue nécessaire au fonctionnement du dispositif 12. Comme bien visible à la Fig.1, le dispositif de guidage et positionnement de véhicule 13 comprend essentiellement un rail de guidage de roue 130 et une cale de roue 131. Pour amener le véhicule 2 vers la position de stationnement adéquate, le conducteur engage ici la roue avant gauche du véhicule 2 dans le rail de guidage de roue 130. Le conducteur fait ensuite avancer le véhicule 2 jusqu'à ce que la roue avant gauche se positionne dans un creux 132 de la cale de roue 131. Le conducteur immobilise alors le véhicule 2 dans cette position, repérée PO, qui est la position adéquate de la roue pour le fonctionnement du dispositif 12. La distance DI (cf. Fig.4) entre le pneumatique de la roue et le dispositif 12 est alors celle qui est voulue et est comprise dans un intervalle de tolérance déterminée, permettant ainsi à la caméra 120 la prise d'une image nette et facile à traiter.

La première fonction susmentionnée réalisée par le dispositif de détection de stationnement de véhicule et de capture d'image de pneumatique 12 détecte la présence de la roue et son absence de mouvement dans la cale de roue 131, absence de mouvement qui indique le stationnement du véhicule 2 et la volonté de l'utilisateur de gonfler les pneumatiques. Cette détection d'absence de mouvement est effectuée par le module logiciel embarqué dans la caméra 120, par traitement et analyse des images. Le module logiciel embarqué délivre une information de validation de stationnement de véhicule DP lorsque la roue est détectée dans les images comme étant restée immobile pendant une durée déterminée DR, depuis l'arrivée de la roue dans la cale de roue 131. Cette durée DR est une temporisation fixée à quelques secondes, typiquement au moins à deux secondes, qui permet de s'assurer de la volonté effective du conducteur de stationner le véhicule 2 et de gonfler les pneumatiques. L'information de validation de stationnement de véhicule DP est transmise par le dispositif 12 à l'unité centrale de commande 100 pour la commande du système 1 et déclenche la deuxième fonction susmentionnée réalisée par le dispositif de détection de stationnement de véhicule et de capture d'image de pneumatique 12.

Comme illustré aux Figs.4 et 5, la deuxième fonction réalisée par le dispositif 12 lit les données de caractéristiques techniques de pneumatique DCT inscrites sur le flanc de pneumatique 30 de la roue 3 du véhicule. Pour cette lecture, un balayage par rayon laser BL est commandé par l'unité centrale de commande 100. Le balayage par rayon laser BL permet de rendre bien visible les données DCT inscrites en relief sur le flanc de pneumatique 30 dans les images prises par la caméra 120. Le module logiciel embarqué dans la caméra 120 traite et analyse les images prises afin d'extraire de celle-ci les données DCT et de les transmettre à l'unité centrale de commande 100.

Comme visible à la Fig.5, les données de caractéristiques techniques de pneumatique DCT du pneumatique comprennent la largeur LA (en mm), la hauteur de flanc HF (en % de la largeur), le type de structure TYP (structure radiale ou structure diagonale), le diamètre DE (en pouce), l'indice de charge IC et l'indice de vitesse IV du pneumatique. Dans cet exemple, les données LA, HF, TYP, DE, IC et IV du pneumatique sont respectivement égales à 205, 45, R, 16, 91 et V.

En référence de nouveau plus particulièrement à la Fig.3, l'automate de gonflage de pneumatique 101 réalise la fonction de gonflage du pneumatique à la valeur de pression indiquée par l'unité centrale de commande 100. Dans cet exemple de réalisation, l'automate de gonflage de pneumatique 101 est conçu pour le gonflage simultané des deux pneumatiques d'un même train du véhicule 2, à savoir, les deux pneumatiques du train avant ou les deux pneumatiques du train arrière.

L'unité centrale de commande 100 transmet des commandes et des consignes de pression de gonflage à l'automate de gonflage de pneumatique 101, à travers le port d'entrée/sortie P104. Le port d'entrée/sortie P104 est typiquement une interface de communication série de type « USB » supportant une liaison filaire de communication.

Comme montré schématiquement à la Fig.3, l'automate de gonflage de pneumatique 101 comprend essentiellement un compresseur d'air électrique COMP, un contrôleur de commande CTRL et un ensemble de gonflage EG. Le compresseur d'air électrique COMP fournit l'air comprimé AC nécessaire au gonflage des pneumatiques. Le contrôleur de commande CTRL commande l'ensemble de gonflage EG en fonction d'une consigne de pression de gonflage PG, transmise par l'unité centrale de commande 100, pour les deux pneumatiques d'un même train du véhicule 2. L'ensemble de gonflage EG comprend des électrovannes E1G, E1D, et E2G, E2D, des capteurs de pression MAG, MAD, et des tuyaux flexibles de gonflage TG, TD. Les électrovannes E1G et E1D sont dédiées au gonflage des pneumatiques gauche et droit par les tuyaux de gonflage TG et TD, respectivement. Les électrovannes E2G et E2D sont dédiées au dégonflage des pneumatiques gauche et droit par les tuyaux flexibles de gonflage TG et TD, respectivement. Les capteurs de pression MAG et MAD fournissent des mesures de pression MPG et MPD pour les pneumatiques gauche et droit, respectivement. Le contrôleur de commande CTRL actionne les électrovannes E1G, E1D, et E2G, E2D, en fonction d'erreurs entre la consigne de pression de gonflage PG et les mesures de pression MPG et MPD. Le contrôleur de commande CTRL commande ainsi de manière asservie l'ensemble de gonflage EG de manière à ajuster les pressions dans les pneumatiques gauche et droit à une valeur égale à la consigne de pression de gonflage PG.

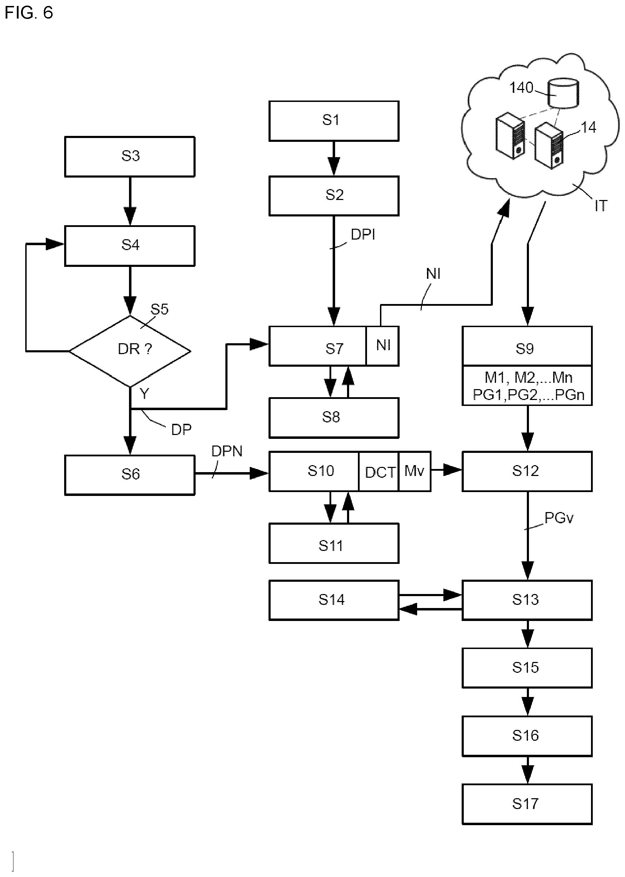

Différentes étapes S1 à S17 du procédé mis en œuvre par le système 1 pour le gonflage automatisé et interactif des pneumatiques du véhicule 2 sont maintenant décrites en référence à l'algorithme fonctionnel de la Fig.6. Le procédé selon l'invention est mis en œuvre par l'exécution par le processeur CPU d'instructions de programme du module logiciel d'application APPLI contenu dans la mémoire MEM de l'unité centrale de commande 100. Le procédé selon l'invention est également mis en œuvre par l'exécution par les processeurs des dispositifs 11 et 12 d'instructions de programme des modules logiciels embarqués contenus dans les mémoires de ces dispositifs.

Le processus réalisé par le système 1 selon l'invention démarre par l'étape S1 lors de laquelle est détectée l'arrivée du véhicule 2 à proximité de la borne de gonflage 10 et du dispositif de guidage et positionnement de véhicule 13. Le traitement réalisé sur l'image prise par la caméra 11 comporte une reconnaissance du véhicule 2 et de sa plaque d'immatriculation PI.

A l'étape S2, un focus est réalisé par la caméra 11 sur la plaque d'immatriculation PI du véhicule 2 et une reconnaissance optique de caractères dite « OCR » (pour « optical character récognition » en anglais) est lancée par le module logiciel embarqué sur l'image prise de la plaque d'immatriculation PI. Des données de plaque d'immatriculation DPI sont récupérées sur l'image prise de la plaque d'immatriculation PI et sont transmises par la caméra 11 à l'unité centrale de commande 100 pour être exploitées par celle-ci à l'étape S7 décrite plus bas.

On notera que la détection du véhicule 2 et la récupération des données de plaque d'immatriculation DPI des étapes S1 et S2 seront typiquement réalisées par le module logiciel embarqué de la caméra 11 alors que le véhicule 2 est encore en mouvement.

L'étape S3 concerne le roulage guidé du véhicule 2 dans le rail de guidage de roue 130 jusqu'à la cale de roue 131.

A l'étape S4, la roue 3 est arrivée sur la cale de roue 131, est située à la distance DI du dispositif 12 et est détectée par le module logiciel embarqué de la caméra 120.

A l'étape S5, le module logiciel embarqué de la caméra 120 enclenche une temporisation ayant la durée DR afin d'exécuter la fonction susmentionnée de détection d'absence de mouvement de roue. Lorsque l'absence de mouvement de la roue 3 dans la cale de roue 131 est détectée (sortie Y) à l'étape S5, l'information de validation de stationnement de véhicule DP est délivrée. Dans le dispositif 12, l'information de validation de stationnement de véhicule DP active l'exécution à l'étape S6 de la fonction susmentionnée de lecture de flanc de pneumatique. L'information de validation de stationnement de véhicule DP est aussi transmise à l'unité centrale de commande 100 pour être exploitée par celle-ci à l'étape S7 décrite plus bas.

A l'étape S6, des données de pneumatique DPN sont récupérées par le dispositif 12 au moyen d'une reconnaissance optique de caractères effectuée par le module logiciel embarqué dans la caméra 120 et exécutée sur une image du flanc de pneumatique de la roue 3, image obtenue avec le balayage par rayon laser. Les données de pneumatique DPN sont transmises à l'unité centrale de commande 100 pour être exploitées par celle-ci à l'étape S10 décrite plus bas.

Dans l'unité centrale de traitement 100, le processus de l'étape S7 est lancé avec la réception de l'information de validation de stationnement de véhicule DP transmise par le dispositif 12 à l'étape S5. A l'étape S7, les données de plaque d'immatriculation DPI récupérées sont traitées et une vérification formelle de cohérence de ces données avec un numéro d'immatriculation de véhicule est réalisée. Dans le cas où les données de plaque d'immatriculation DPI sont validées par la vérification formelle de cohérence, celles-ci sont acceptées par le processus comme étant le numéro d'immatriculation NI du véhicule 2. Une requête avec ce numéro d'immatriculation NI est lancée ensuite par l'unité centrale de traitement 100 à destination du serveur informatique 14 afin de récupérer dans la base de données 140 le type du véhicule 2, les différentes montes de pneumatiques M1, M2, ...Mn associées au type du véhicule 2 et les données de pression de gonflage PG1, PG2, PGn associées respectivement à ces montes de pneumatiques.

Lorsque les données de plaque d'immatriculation DPI n'ont pas été validées par la vérification formelle de cohérence ou lorsque le numéro d'immatriculation NI transmis avec la requête au serveur informatique 14 n'est pas connu dans la base de données 140 de celui-ci, le processus lance à l'étape S8 un dialogue avec l'utilisateur, à travers l'écran tactile ET. Il est alors demandé à l'utilisateur de saisir manuellement le numéro d'immatriculation NI et/ou le type du véhicule 2 et une nouvelle requête avec les informations saisies est lancée par l'unité centrale de traitement 100 à destination du serveur informatique 14 afin de récupérer dans les bases de données 140 les différentes montes de pneumatiques M1, M2, ...Mn associées au type du véhicule 2 et les données de pression de gonflage PG1, PG2, ... PGn associées respectivement à ces montes de pneumatiques.

A l'étape S9, les différentes montes de pneumatiques M1, M2, ...Mn associées au type du véhicule 2 et les données de pression de gonflage PG1, PG2, ... PGn associées sont disponibles pour être exploitées par l'unité centrale de commande 100 à l'étape S12 décrite plus bas.

A l'étape S10, des données de pneumatique DPN transmises par le dispositif 12 à l'unité centrale de commande 100 sont traitées par celle-ci et une vérification formelle de cohérence de ces données avec des données de caractéristiques techniques de pneumatique DCT (cf. Fig.5) est réalisée. Dans le cas où les données de pneumatique DPN sont validées par la vérification formelle de cohérence, celles-ci sont affichées à l'étape S11 sur l'écran tactile ET pour une validation demandée à l'utilisateur. Une fois validées par l'utilisateur, les données de pneumatique DPN sont acceptées par le processus comme étant les données de caractéristiques techniques de pneumatique DCT définissant une monte de pneumatiques Mv qui est celle du véhicule 2. Lorsque les données de pneumatique DPN n'ont pas été validées par la vérification formelle de cohérence, celles-ci sont affichées à l'étape S11 sur l'écran tactile ET et le processus demande à l'utilisateur de saisir manuellement les données inscrites sur le flanc de pneumatique 30, typiquement à travers un menu déroulant. Une fois les données saisies et validées par l'utilisateur, celles-ci sont acceptées par le processus comme étant les données de caractéristiques techniques de pneumatique DCT définissant la monte de pneumatiques Mv du véhicule 2. La monte de pneumatiques Mv du véhicule 2 est exploitée par l'étape S12 ci-après afin de déterminer les données de pression de gonflage s'appliquant au véhicule 2.

A l'étape S12, une coïncidence pour la monte de pneumatiques Mv du véhicule 2 est identifiée par le processus dans les différentes montes de pneumatiques M1, M2, ... Mn disponibles. Cette coïncidence permet de sélectionner des données de pression de gonflage PGv qui correspondent à la monte de pneumatiques Mv du véhicule 2.

A l'étape S13, les données de pression de gonflage PGv sont affichées sur l'écran tactile ET à l'intention de l'utilisateur. A l'étape S14, l'utilisateur à la possibilité à travers un dialogue sur l'écran tactile ET de préciser éventuellement des conditions particulières, telles qu'un véhicule chargé, un roulage prévu sur autoroute et autres. Une validation des données de pression de gonflage PGv, ajustées automatiquement si des conditions particulières ont été précisées, est ensuite demandée à l'utilisateur.

A l'étape S15, les données de pression de gonflage PGv ayant été validées, le processus demande à l'utilisateur de raccorder les tuyaux flexibles de gonflage TG, TD, sur les valves de gonflage des pneumatiques des roues du véhicule 2, et de confirmer sur l'écran tactile ET le raccordement des tuyaux flexibles de gonflage TG, TD, une fois celui-ci effectué. L'étape S16 est exécutée ensuite et concerne la commande de l'automate de gonflage de pneumatique 101 avec les données de pression de gonflage PGv. A l'étape S17, l'opération de gonflage des pneumatiques par l'automate 101 est achevée et le processus en informe l'utilisateur par l'émission d'un signal sonore au moyen du haut-parleur HP, afin que l'utilisateur retire les tuyaux flexibles de gonflage TG, TD, des valves de gonflage des roues.

Les étapes S15 à S17 sont effectuées deux fois, une fois pour le gonflage des pneumatiques des roues avant et une autre fois pour le gonflage des pneumatiques des roues arrière du véhicule 2.

Des étapes supplémentaires, non représentées, pourront aussi être intégrées dans le processus afin de gonfler la roue de secours du véhicule à une pression prédéfinie, par exemple 3 bars.

On notera ici que le haut-parleur HP pourra de manière générale être utilisés dans les différents dialogues susmentionnés avec l'utilisateur, pour l'émission de messages vocaux ou signaux sonores.

Bien entendu, l'invention ne se limite pas aux exemples de réalisation qui ont été décrits ici à titre illustratifs. L'homme du métier, selon les applications de l'invention, pourra apporter différentes modifications et variantes entrant dans le champ de protection de l'invention.

## Revendications

1. [Procédé de gonflage des pneumatiques d'un véhicule (2) comprenant une étape (S1, S2, S7, S8) de lecture d'un numéro d'immatriculation (NI) du véhicule (2) par reconnaissance optique de caractères sur une image prise par une première caméra (11) d'une plaque d'immatriculation (PI) du véhicule (2), une étape (S9) d'identification d'un ensemble de données de pression de gonflage (PG1, PG2, ...PGn) correspondant à différentes montes de pneumatiques (M1, M2, ...Mn) associées à un type du véhicule (2) à partir d'au moins une interrogation avec le numéro d'immatriculation lu (NI) d'au moins une base de données (140), une étape (S3 à S6, S10, S11) d'identification d'une monte de pneumatiques (Mv) présente dans le véhicule (2), une étape (S12) de sélection dans l'ensemble de données de pression de gonflage identifiées (PG1, PG2, ... PGn) de données de pression de gonflage (PGv) pour le véhicule (2) à partir de la monte de pneumatiques identifiée (Mv) du véhicule (2), et une étape (S16) de commande avec les données de pression de gonflage sélectionnées (PGv), en tant que consignes de pression de gonflage, d'un automate de gonflage de pneumatique (101) relié à des pneumatiques du véhicule (2) afin d'ajuster les pressions de gonflage des pneumatiques, dans lequel l'étape d'identification de la monte de pneumatiques présente dans le véhicule comprend une sous-étape (S3) de guidage du véhicule (2) roulant jusqu'à une position de stationnement adéquate (131) dans laquelle une roue (3) du véhicule (2) est placée dans une position de roue déterminée (PO) par rapport à une deuxième caméra (120) et un dispositif de balayage par rayon laser (121), une sous-étape (S4, S5) de validation de stationnement du véhicule (2) par une détection sur des images prises par la deuxième caméra (120) d'une absence de mouvement de la roue (3) à la position de roue déterminée (PO) pendant une durée déterminée (DR), et une sous-étape (S6) de lecture de données de caractéristiques techniques de pneumatique (DPN, DCT), identifiant la monte de pneumatiques (Mv) présente dans le véhicule (2), par reconnaissance optique de caractères sur une image prise avec balayage par rayon laser (BL) par la deuxième caméra (120) d'un flanc de pneumatique (30) de la roue (3) à la position de roue déterminée (PO).

2. Procédé selon la revendication 1, **caractérisé en ce que** ladite étape (S9) d'identification de l'ensemble de données de pression de gonflage (PG1, PG2, ...PGn) correspondant aux différentes montes de pneumatiques associées au type du véhicule comprend une première interrogation de base de données (140) avec le numéro d'immatriculation lu (NI) pour obtenir le type du véhicule (2) et une deuxième interrogation de base de données (140) avec le type du véhicule pour obtenir l'ensemble de données de pression de gonflage (PG1, PG2, ...PGn) correspondant aux différentes montes de pneumatiques associées (M1, M2, ...Mn).

3. Procédé selon la revendication 1 ou 2, **caractérisé en ce que** ladite au moins une base de données (140) est hégergée dans au moins un serveur informatique (14) relié à un réseau de communication de données de type Internet (IT) et accessible à travers un réseau téléphonique de communication de données (GC).

4. Procédé selon l'une quelconque des revendications 1 à 3, **caractérisé en ce que** lesdites données de caractéristiques techniques de pneumatique (DCT) comprennent une largeur de pneumatique (LA), une hauteur de flanc de pneumatique (HF), un type de structure de pneumatique (TYP), un diamètre de pneumatique (DE), un indice de charge de pneumatique (IC) et un indice de vitesse de pneumatique (IC).

5. Procédé selon l'une quelconque des revendications 1 à 4, **caractérisé en ce qu'**il comprend une sous-étape (S10, S11) de validation par l'utilisateur des données de caractéristiques techniques de pneumatique lues (DPN, DCT) et/ou d'indication par l'utilisateur des données de caractéristiques techniques de pneumatique (DCT) du véhicule (2) en cas d'échec de lecture lors de la sous-étape (S6) de lecture des données de caractéristiques techniques de pneumatique (DPN, DCT).

6. Procédé selon l'une quelconque des revendications 1 à 5, **caractérisé en ce qu'**il comprend une étape (S13, S14) de validation par l'utilisateur des données de pression de gonflage sélectionnées (PGv) et/ou de modification des données de pression de gonflage sélectionnées (PGv) en fonction d'une indication de l'utilisateur, qui précède l'étape (S16) de commande avec les données de pression de gonflage sélectionnées (PGv), en tant que consignes de pression de gonflage, de l'automate de gonflage de pneumatique (101).

7. Système (1) de gonflage des pneumatiques d'un véhicule (2) pour la mise en œuvre du procédé selon l'une quelconque des revendications 1 à 6, comprenant une unité centrale de commande (100), des moyens d'interface homme-machine (ET, HP), une première caméra (11) dédiée à une lecture d'un numéro d'immatriculation (NI) du véhicule (2), un dispositif de guidage et positionnement de véhicule (13), un dispositif de détection de stationnement de véhicule et de capture d'image de pneumatique (12), un automate de gonflage de pneumatique (101) et un ou plusieurs serveurs informatiques distants (14), hébergeant une ou plusieurs bases de données (140), reliés à un réseau de communication de données de type Internet (IT) et en communication avec l'unité centrale de commande (100) à travers un réseau téléphonique de communication de données (GC), **caractérisé en ce que** ledit dispositif de guidage et positionnement de véhicule (13) comprend un rail de guidage de roue (130) et une cale de roue (131) fixant une position de roue déterminée (PO), et **en ce que** ledit dispositif de détection de stationnement de véhicule et de capture d'image de pneumatique (12) comprend une deuxième caméra (120) et un dispositif de balayage par rayon laser (121) agencés de façon à réaliser une première fonction (S4, S5) de détection de roue et d'absence de mouvement de roue pendant une durée déterminée (DR) et une deuxième fonction (S6) de lecture de caractéristiques techniques de pneumatique (DPN, DCT) sur un flanc de pneumatique (30) de la roue (3).

8. Système selon la revendication 7, **caractérisé en ce que** l'unité centrale de commande (100), les moyens d'interface homme-machine (ET, HP) et l'automate de gonflage de pneumatique (101) sont intégrés dans une borne de gonflage (10).

9. Système selon la revendication 7 ou 8, **caractérisé en ce que** les moyens d'interface homme-machine comprennent un écran tactile (ET).

10. Système selon l'une quelconque des revendications 7 à 9, **caractérisé en ce que** les moyens d'interface homme-machine comprennent un haut-parleur (HP).

## Patentansprüche

1. Verfahren zum Füllen von Reifen eines Fahrzeugs (2), umfassend einen Schritt (S1, S2, S7, S8) eines Auslesens einer Zulassungsnummer (NI) des Fahrzeugs (2) durch optische Zeichenerkennung auf einem Bild, das durch eine erste Kamera (11) von einem Kennzeichen (PI) des Fahrzeugs (2) aufgenommen wird, einen Schritt (S9) eines Identifizierens eines Satzes von Fülldruckdaten (PG1, PG2, ...PGn), die verschiedenen Reifenmontagen (M1, M2, ...Mn) entsprechen, die einem Typ des Fahrzeugs (2) zugeordnet sind, aus mindestens einer Abfrage mit der ausgelesenen Zulassungsnummer (NI) aus mindestens einer Datenbank (140), einen Schritt (S3 bis S6, S10, S11) des Identifizierens einer in dem Fahrzeug (2) vorhandenen Reifenmontage (Mv), einen Schritt (S12) eines Auswählens in dem Satz von identifizierten Fülldruckdaten (PG1, PG2, ...PGn) von Fülldruckdaten (PGv) für das Fahrzeug (2) aus der identifizierten Reifenmontage (Mv) des Fahrzeugs (2), und einen Schritt (S16) eines Steuerns, mit den ausgewählten Fülldruckdaten (PGv) als Reifendruckvorgaben, eines Reifenfüllautomaten (101), der mit Reifen des Fahrzeugs (2) verbunden ist, um die Fülldrücke der Reifen einzustellen, wobei der Schritt des Identifizierens der in dem Fahrzeug vorhandenen Reifenmontage einen Unterschritt (S3) eines Führens des rollenden Fahrzeugs (2) in eine geeignete Parkposition (131), in der ein Rad (3) des Fahrzeugs (2) in einer bestimmten Radposition (PO) in Bezug auf eine zweite Kamera (120) und eine Laserstrahlabtastvorrichtung (121) angeordnet ist, einen Unterschritt (S4, S5) eines Validierens des Parkens des Fahrzeugs (2) durch eine Erfassung auf durch die zweite Kamera (120) aufgenommenen Bildern eines Fehlens der Bewegung des Rades (3) an der bestimmten Radposition (PO) während einer bestimmten Dauer (DR), und einen Unterschritt (S6) des Auslesens von technischen Reifenmerkmalsdaten (DPN, DCT) umfasst, die die in dem Fahrzeug (2) vorhandene Reifenmontage (Mv) identifizieren, durch optische Zeichenerkennung auf einem Bild, das durch die zweite Kamera (120) mit Laserstrahlabtastung (BL) von einer Reifenseitenflanke (30) des Rades (3) in der bestimmten Radposition (PO) aufgenommen wird.

2. Verfahren nach Anspruch 1, **dadurch gekennzeichnet, dass** der Schritt (S9) des Identifizierens des Satzes von Fülldruckdaten (PG1, PG2, ...PGn), die den verschiedenen Reifenmontagen entsprechen, die dem Typ des Fahrzeugs zugeordnet sind, eine erste Datenbankabfrage (140) mit der ausgelesenen Zulassungsnummer (NI) zum Erhalten des Typs des Fahrzeugs (2) und eine zweite Datenbankabfrage (140) mit dem Typ des Fahrzeugs zum Erhalten des Fülldruckdatensatzes (PG1, PG2, ...PGn), der den verschiedenen zugeordneten Reifenmontagen (M1, M2, ...Mn) entspricht, umfasst.

3. Verfahren nach Anspruch 1 oder 2, **dadurch gekennzeichnet, dass** die mindestens eine Datenbank (140) in mindestens einem Computerserver (14) untergebracht ist, der mit einem Datenkommunikationsnetz von dem Typ Internet (IT) verbunden und über ein Datenkommunikationstelefonnetz (GC) zugänglich ist.

4. Verfahren nach einem der Ansprüche 1 bis 3, **dadurch gekennzeichnet, dass** die technischen Reifenmerkmalsdaten (DCT) eine Reifenbreite (LA), eine Reifenseitenwandhöhe (HF), einen Reifenaufbautyp (TYP), einen Reifendurchmesser (DE), einen Reifenbelastungsindex (IC) und einen Reifengeschwindigkeitsindex (IC) umfassen.

5. Verfahren nach einem der Ansprüche 1 bis 4, **dadurch gekennzeichnet, dass** es einen Unterschritt (S10, S11) des Validierens durch den Benutzer der ausgelesenen technischen Reifenmerkmalsdaten (DPN, DCT) und/oder des Angebens durch den Benutzer der technischen Reifenmerkmalsdaten (DCT) des Fahrzeugs (2) umfasst, falls das Auslesen während Unterschritt (S6) des Auslesens der technischen Reifenmerkmale (DPN, DCT) fehlschlägt.

6. Verfahren nach einem der Ansprüche 1 bis 5, **dadurch gekennzeichnet, dass** es einen Schritt (S13, S14) des Validierens der ausgewählten Fülldruckdaten (PGv) und/oder des Änderns der ausgewählten Fülldruckdaten (PGv) gemäß einer Benutzerangabe umfasst, der dem Schritt (S16) des Steuerns mit den ausgewählten Fülldruckdaten (PGv) als Fülldruckvorgaben des Reifenfüllautomaten (101) vorausgeht.

7. System (1) zum Füllen der Reifen eines Fahrzeugs (2) zum Durchführen des Verfahrens nach einem der Ansprüche 1 bis 6, umfassend eine zentrale Steuereinheit (100), Mittel einer Mensch-Maschine-Schnittstelle (ET, HP), eine erste Kamera (11), die auf das Auslesen einer Zulassungsnummer (NI) des Fahrzeugs (2) spezialisiert ist, eine Vorrichtung zum Führen und Positionieren des Fahrzeugs (13), eine Vorrichtung zum Erfassen des Parkens eines Fahrzeugs und zum Aufzeichnen eines Reifenbildes (12), einen Reifenfüllautomaten (101) und einen oder mehrere entfernte Computerserver (14), die eine oder mehrere Datenbanken (140) unterbringen und mit einem Datenkommunikationsnetz von dem Typ Internet (IT) verbunden sind und über ein Datenkommunikationstelefonnetz (GC) mit der zentralen Steuereinheit (100) in Verbindung stehen, **dadurch gekennzeichnet, dass** die Vorrichtung zum Führen und Positionieren des Fahrzeugs (13) eine Radführungsschiene (130) und einen Radkeil (131) umfasst, der eine bestimmte Radposition (PO) festlegt, und dass die Vorrichtung zum Erfassen des Parkens eines Fahrzeugs und zum Aufzeichnen eines Reifenbildes (12) eine zweite Kamera (120) und eine Laserstrahlabtastvorrichtung (121) umfasst, die so angeordnet sind, dass sie eine erste Funktion (S4, S5) der Erfassung des Rades und des Fehlens des Bewegung des Rades für eine bestimmte Zeit (DR) und eine zweite Funktion (S6) des Auslesens von technischen Reifenmerkmalen (DPN, DCT) auf einer Reifenseitenwand (30) des Rades (3) durchführen.

8. System nach Anspruch 7, **dadurch gekennzeichnet, dass** die zentrale Steuereinheit (100), die Mittel der Mensch-Maschine-Schnittstelle (ET, HP) und der Reifenfüllautomat (101) in eine Füllstation (10) integriert sind.

9. System nach Anspruch 7 oder 8, **dadurch gekennzeichnet, dass** die Mittel der Mensch-Maschine-Schnittstelle einen Touchscreen (ET) umfassen.

10. System nach einem der Ansprüche 7 bis 9, **dadurch gekennzeichnet, dass** die Mittel der Mensch-Maschine-Schnittstelle einen Lautsprecher (HP) umfassen.

## Claims

1. Method for inflating the tires of a vehicle (2) comprising a step (S1, S2, S7, S8) of reading a registration number (NI) of the vehicle (2) by optical character recognition on an image taken by a first camera (11) of a license plate (PI) of the vehicle (2), a step (S9) of identifying a set of inflation pressure data (PG1, PG2, ...PGn) corresponding to different tire mountings (M1, M2, ...Mn) associated with a type of the vehicle (2) from at least one query with the read registration number (NI) of at least one database (140), a step (S3 to S6, S10, S11) of identifying a tire mounting (Mv) present in the vehicle (2), a step (S12) of selecting inflation pressure data (PGv) for the vehicle (2) from the set of identified inflation pressure data (PG1, PG2, ...PGn) on the basis of the identified tire mounting (Mv) of the vehicle (2), and a step (S16) of controlling, with the selected inflation pressure data (PGv) as inflation pressure set values, an automatic tire inflator (101) connected to the tires of the vehicle (2) in order to adjust the inflation pressures of the tires, wherein the step of identifying the tire mounting present in the vehicle comprises a sub-step (S3) of guiding the traveling vehicle (2) to a suitable parking position (131) in which a wheel (3) of the vehicle (2) is placed in a determined wheel position (PO) with respect to a second camera (120) and a laser beam scanning device (121), a sub-step (S4, S5) of validating the parking of the vehicle (2) by detecting, on images taken by the second camera (120), an absence of movement of the wheel (3) at the determined wheel position (PO) for a determined period of time (DR), and a sub-step (S6) of reading tire technical characteristic data (DPN, DCT) identifying the tire mounting (Mv) present in the vehicle (2) by optical character recognition on an image taken with laser beam scanning (BL) by the second camera (120) of a tire sidewall (30) of the wheel (3) at the determined wheel position (PO).

2. Method according to claim 1, **characterized in that** said step (S9) of identifying the set of inflation pressure data (PG1, PG2, ...PGn) corresponding to the different tire mountings associated with the type of the vehicle comprises a first query of the database (140) with the read registration number (NI) to obtain the type of the vehicle (2) and a second query of the database (140) with the type of the vehicle to obtain the set of inflation pressure data (PG1, PG2, ...PGn) corresponding to the different associated tire mountings (M1, M2, ...Mn).

3. Method according to claim 1 or 2, **characterized in that** said at least one database (140) is hosted on at least one computer server (14) which is connected to an Internet data communication network (IT) and is accessible through a telephone data communication network (GC).

4. Method according to any of claims 1 to 3, **characterized in that** said tire technical characteristic data (DCT) comprise a tire width (LA), a tire sidewall height (HF), a tire structure type (TYP), a tire diameter (DE), a tire load index (IC) and a tire speed index (IC).

5. Method according to any of claims 1 to 4, **characterized in that** it comprises a sub-step (S10, S11) of validation by the user of the read tire technical characteristic data (DPN, DCT) and/or of indication by the user of the tire technical characteristic data (DCT) of the vehicle (2) in the event of a reading failure during the sub-step (S6) of reading the tire technical characteristic data (DPN, DCT).

6. Method according to any of claims 1 to 5, **characterized in that** it comprises a step (S13, S14) of validation by the user of the selected inflation pressure data (PGv) and/or of modification of the selected inflation pressure data (PGv) on the basis of an indication from the user, which precedes the step (S16) of controlling the automatic tire inflator (101) with the selected inflation pressure data (PGv) as inflation pressure set values.

7. System (1) for inflating the tires of a vehicle (2) for implementing the method according to any of claims 1 to 6, comprising a central control unit (100), human-machine interface means (ET, HP), a first camera (11) for reading a registration number (NI) of the vehicle (2), a vehicle guidance and positioning device (13), a vehicle parking detection and tire image capture device (12), an automatic tire inflator (101) and one or more remote computer servers (14) hosting one or more databases (140) which are connected to an Internet data communication network (IT) and are in communication with the central control unit (100) via a telephone data communication network (GC), **characterized in that** said vehicle guidance and positioning device (13) comprises a wheel guide rail (130) and a wheel chock (131) fixing a determined wheel position (PO), and **in that** said vehicle parking detection and tire image capture device (12) comprises a second camera (120) and a laser beam scanning device (121) arranged so as to perform a first function (S4, S5) of detecting a wheel and an absence of wheel movement for a determined period of time (DR) and a second function (S6) of reading the tire technical characteristics (DPN, DCT) on a tire sidewall (30) of the wheel (3).

8. System according to claim 7, **characterized in that** the central control unit (100), the human-machine interface means (ET, HP) and the automatic tire inflator (101) are integrated in an inflation terminal (10).

9. System according to claim 7 or 8, **characterized in that** the human-machine interface means comprise a touch screen (ET).

10. System according to any of claims 7 to 9, **characterized in that** the human-machine interface means comprise a loudspeaker (HP).
